# EUROPÄISCHE PATENTSCHRIFT

(11) **EP 0 610 809 B1**
(45) Veröffentlichungstag und Bekanntmachung des Hinweises auf die Patenterteilung: **06.09.2000**
(21) Anmeldenummer: 94101625.5
(22) Anmeldetag: 03.02.1994
(51) Int. Cl.: C07F 7/12, B01J 31/02

(54) **Verfahren zur Disproportionierung von Aryl- oder Alkylhalogendisilanen zu Aryl- oder Alkylhalogenmono- und Aryl oder Alkylhalogenpolysilanen**
Process for the disproportionation of aryl- or alkylhalosilanes in aryl or alkylhalomonosilanes and aryl- or alkylhalopolysilanes
Procédé de disproportionnement des alkyl- ou arylhalodisilanes en aryl- ou alkylhalomono et aryl- ou alkylhalopolysilanes

(30) Priorität: 12.02.1993 DE 4304256
(43) Veröffentlichungstag der Anmeldung: 17.08.1994
(73) Patentinhaber: GE Bayer Silicones GmbH & Co. KG, 40699 Erkrath (DE)
(72) Erfinder: Brendler, Erica, Dr., D-09599 Freiberg (DE); Roewer, Gerhard, Prof. Dr., D-09599 Freiberg (DE)
(74) Vertreter: Leifert, Elmar, Dr.

(56) Entgegenhaltungen:
- EP-A- 0 021 373
- EP-A- 0 074 837
- EP-A- 0 138 670
- EP-A- 0 286 074
- EP-A- 0 574 912

## Beschreibung

Die Erfindung betrifft die Verwendung bestimmter Verbindungen als Katalysatoren zur Disproportionierung von Aryl- oder Alkylhalogendisilan zu Aryl- oder Alkylhalogenmonosilan und Aryl-oder Alkylhalogenpolysilan, sowie ein Verfahren zur Disproportionierung von Aryl- oder Alkylhalogendisilanen unter Verwendung dieser Katalysatoren.

Aryl- und Alkylhalogensilane, d. h. durch Aryl- oder Alkylgruppen und Halogenatome substituierte Silane, insbesondere Methylchlorsilane, sind wertvolle industrielle Ausgangsprodukte für die Herstellung von Silikonprodukten.

Methylchlorsilane z. B. Dichlordimethylsilan, Trichlormethylsilan werden u. a. nach dem Müller-Rochow-Syntheseverfahren hergestellt. Hierbei fallen jedoch nach Destillation der Produkte Rückstände in Mengen bis zu 10 Gew.-% an, die höhere Siedepunkte aufweisen. Aus diesen Destillationsrückständen läßt sich eine Fraktion gewinnen, die im Temperaturbereich von etwa 150 - 160 °C siedet und die im wesentlichen aus Alkylhalogendisilanen, z. B. Methylchlordisilanen, besteht. Aus betriebswirtschaftlichen und ökologischen Gesichtspunkten heraus ist eine vollständige Verwertung der eingesetzten Rohstoffe, und somit auch eine Aufarbeitung der Destillationsrückstände anzustreben. Die bisher bekannten Verfahren zur katalytischen Disproportionierung von z. B. Methylchlordisilanen zu monomeren Methylchlorsilanen und Methylchlorpolysilanen verwenden als katalytisch wirksame Stoffe vorzugsweise
- Amine, z. B. NR₃ mit R = H, Alkyl, Aryl sowie die entsprechenden quarternären Ammoniumsalze
- quarternäre Phosphoniumsalze
- Hexamethylphosphorsäuretriamid (HMPT)
- Cyanide, insbesondere Silbercyanid

Nachteile dieser katalytisch wirksamen Substanzen sind z. B. geringe Aktivität bzw. es sind lange Reaktionszeiten erforderlich, wobei die erhaltenen Polysilane trotz der langen Reaktionszeiten oft eine sehr sirupartige Konsistenz haben, was auf einen hohen Anteil an relativ niedermolekularen Polysilanen zurückzuführen ist, wodurch ihre Weiterverarbeitung erschwert wird und was bei der Umwandlung in keramische Produkte zu geringen Ausbeuten führt. Der Anteil und die Zusammensetzung der gewonnenen Monosilanfraktion kann außerdem nur in engen Grenzen variiert werden.

Andererseits ist z.B. der Einsatz von HMPT aufgrund seiner physiologischen Bedenklichkeit trotz seiner guten katalytischen Eigenschaften nicht ohne weiteres zu befürworten.

Aus der EP-A- 0 286 074 sin bereits Verfahren zur Disproportionierung von Dichlormethylsilan bekannt geworden, in denen Katalysatoren verwendet werden, die unter anderem Heterocyclen enthalten. In diesen Verfahren werden jedoch keine Di- oder Poly-silane disproportioniert.

Der Erfindung lag daher die Aufgabe zugrunde, Katalysatoren für die katalytische Disproportionierung von Disilanen zu Mono- und Polysilanen bereitzustellen, die sich durch hohe Aktivität und Selektivität auszeichnen und ökologisch weniger bedenklich sind und mit denen sich durch Modifizierung der Verfahrensparameter die Zusammensetzung der Disproportionierungsprodukte steuern läßt.

Erfindungsgemäß wird die Aufgabe durch die Verwendung eines heterocyclischen Kohlenwasserstoffs mit mindestens einem N-Atom in mindestens einem Kohlenwasserstoffring, in dem die Anordnung des Stickstoffes eine ausreichende Polarität des Moleküls gewährleistet sowie einem Verfahren zur Durchführung der Disproportionierung unter Verwendung dieser Katalysatoren gelöst.

Die erfindungsgemäß zu verwendenden heterocyclischen Kohlenwasserstoffe weisen mindestens ein N-Atom in mindestens einem 4- bis 8-gliedrigen Kohlenwasserstoffring auf, wobei die Ringnachbarn des Stickstoffes Kohlenstoff oder Stickstoff sein können und der oder die Kohlenwasserstoffringe unabhängig voneinander aromatische oder nichtaromatische Kohlenwasserstoffringe sind.

Der Stickstoff im Kohlenwasserstoffring kann durch
- H
- Alkyl, verzweigt oder linear, vorzugsweise C₁ bis C₆-Alkyl
- Sauerstoff
- Halogen
- Trialkoxysilyl
- NR₂, wobei R=H, C₁ bis C₆-Alkyl linear oder verzweigt, Trialkoxysilyl bedeutet
   substituiert sein
   oder über 2 Sigma- und 1 π-Bindung im Ring gebunden sein oder den Brückenkopf zu einem weiteren Ring bilden.

Der Kohlenstoff im Kohlenwasserstoffring kann je nach Bindungsverhalten zum Ringnachbarn ein- oder zweifach durch
- H
- Alkyl, verzweigt oder linear, vorzugsweise C₁ bis C₆-Alkyl
- Halogen
- Sauerstoff
- NR₂, wobei R=H, C₁ bis C₆-Alkyl linear oder verzweigt, Trialkoxysilyl bedeutet
   substituiert sein
   oder ein weiteres Kohlenwasserstoffringsystem tragen oder er bildet den Brückenkopf zu einem weiteren Ringsystem.

Die Substituenten können unabhängig voneinander gleich oder ungleich sein. N-haltige heterocyclische Kohlenwasserstoffe, die sich erfindungsgemäß besonders als katalytisch wirksame Substanzen für die Disproportionierung von Aryl- und/oder Alkylhalogendisilanen eignen, sind z. B. 5-Ringe mit 1 bis 3 N-Atomen im Kohlenwasserstoffring, vorzugsweise Imidazol, 1-Methylimidazol, 2-Methylimidazol, Pyrazol, 3-Methylpyrazol, Pyrrolidon, N-Methylpyrrolidon, 1.3-Dimethyl-2-imidazolidon oder Triazol oder 6-Ringe mit mindestens einem N-Atom im Kohlenwasserstoffring, vorzugsweise 2,2'-Bipyridin, 1.3-Dimethyl-3.4.5.6-tetrahydro-2(1H)pyrimidon oder N,N-Dibutylpiperazin oder polycyclische Kohlenwasserstoffe mit mindestens einem N-Atom im Kohlenwasserstoffring, vorzugsweise Benzimidazol, Benzotriazol, Urotropin, 1.5.7-Triazabicyclo[4.4.0]-dec-5-en (TBD), 1.8-Diazabicyclo[5.4.0]-undec-7-en, 1.5-Diazabicyclo[4.3.0]-non-5-en, Diazobicyclooctan (DABCO).

Diese katalytisch wirksamen Substanzen können sowohl an einen Träger, vorzugsweise einen silikatischen Träger, fixiert sein als auch direkt als Katalysator für die Disproportionierung eingesetzt werden.

Die katalytische Disproportionierung kann sowohl in der homogenen als auch in der heterogenen Phase ablaufen, wobei die Umsetzung an dem Katalysator unter Bildung von Monosilanen und Polysilanen bei Temperaturen von 50 bis 350 °C erfolgt.

In einer Varianten der Erfindung ist der Katalysator ein Trägerkatalysator, der sich dadurch auszeichnet, daß die katalytische Komponente direkt oder über einen Spacer und/oder über Siloxygruppen an der Oberfläche eines Trägermaterials, vorzugsweise eines silikatischen Trägermaterials, fixiert ist.

Als silikatisches Trägermaterial im Sinne der Erfindung sind an sich alle anorganischen Materialien auf Basis von Siliziumdioxid geeignet.

Das silikatische Trägermaterial kann ein Siliziumdioxidmaterial z.B. Kieselgel, poröse Gläser, Silikate, Silikalite, ein Aluminiumsilikatmaterial oder ein Zeolithmaterial sein, wobei in den Aluminiumsilikaten und in Zeolithen die katalytische Komponente ggf. zum Teil auch über Al-OH-Gruppen direkt (ohne Spacer) oder indirekt (mit Spacer) kovalent gebunden sein kann. Gegebenenfalls kann das dem erfindungsgemäßen Katalysator zugrundeliegende silikatische Trägermaterial auch ein in an sich bekannter Weise oberflächenmodifiziertes Trägermaterial sein.

Diese Trägerkatalysatoren eignen sich sehr gut zur heterogenen katalytischen Disproportionierung, da die katalytische Komponente an einem inerten Trägermaterial fest fixiert ist, wodurch eine leichte Trennung von gebildeten Produkten und Katalysator ermöglicht wird und somit die unerwünschte Kontamination der katalytisch gebildeten Produkte mit katalytisch aktiver Komponente vermieden wird.

Bevorzugt führt man die zu disproportionierenden Disilane dampf- oder gasförmig an den Katalysator heran.

Bei dieser bevorzugten Verfahrensweise wird die katalytische Umsetzung bei Katalysatortemperaturen, die oberhalb der Siedepunkte der als Produkt gebildeten Monosilane liegen, durchgeführt. Inbesondere werden Alkylhalogendisilane bei einer Temperatur von mindestens 100 °C vorzugsweise bei 120 bis 130 °C unter Schutzgas umgesetzt.

Entspricht die Temperatur am Katalysator wenigstens der Siedetemperatur der gebildeten Monosilane, so verdampfen diese sofort nach der Bildung am Katalysator und können ohne weitere Isolierungsmaßnahmen allein durch Kondensation direkt gewonnen werden.

In einer weiteren Verfahrensvariante werden daher die als Produkt gebildeten Monosilane bereits während der Umsetzung am vorzugsweise beheizten Katalysator verdampft und somit durch destillative Abtrennung gewonnen, während die ggf. bei der Umsetzung anfallenden höhersiedenden Polysilane in den Sumpf, aus dem man die Disilan-Edukte für die Gasphasenumsetzung am Katalysator verdampft, zurückgeführt und dort gesammelt werden.

Die im Sumpf gesammelten Polysilane können je nach Temperatur des Sumpfes ggf. bereits während der Destillation und katalytischen Umsetzung teilweise zu Polycarbosilanen umgewandelt werden.

In einer weiteren Variante des Verfahrens werden daher die im Sumpf enthaltenen Polysilane zur weiteren Umwandlung zu Polycarbosilanen bei Temperaturen bis 400 °C thermisch nachbehandelt und die gebildeten Polycarbosilane als Produkt gewonnen. Diese Nachbehandlung kann auch im Vakuum durchgeführt werden.

Das vorstehend beschriebene Verfahren zur heterogenen katalytischen Disproportionierung von Disilanen zu Mono- und Polysilanen ermöglicht eine kontinuierliche Prozeßführung, z.B. für die Aufarbeitung von Disilan-haltigen Destillationsrückständen aus der Müller-Rochow-Synthese sowie die katalysatorfreie Gewinnung der Reaktionsprodukte.

Ein weiterer Vorteil dieser Verfahrensweise ist neben der Gewinnung von reinen Monosilanen die Bildung von polymeren Reaktionsprodukten, die unterschiedlich stark vernetzt sein können und damit überwiegend löslich bzw. nicht mehr löslich in organischen Lösungsmitteln sind. Das Produkt kann damit der gewünschten Weiterverarbeitung angepaßt werden.

Eine weitere bevorzugte Verfahrensweise zur heterogenen katalytischen Disproportionierung der Silane besteht darin, daß der erfindungsgemäße Trägerkatalysator direkt mit den Disilanen im Reaktionsgefäß in Kontakt gebracht wird. Vorteilhafterweise wird die Disproportionierung unter Schutzgas durchgeführt. Die gebildeten Monosilane werden während der Reaktion direkt abdestilliert. Die im Sumpf verbliebenen Polysilane können ebenfalls wie oben beschrieben ohne weiteres vom Katalysator getrennt und thermisch nachbehandelt werden.

Die erfindungsgemäßen Katalysatoren sind außerdem direkt für die katalytische Disproportionierung von Disilanen geeignet, ohne daß sie auf ein Trägermaterial fixiert sein müssen. Diese Verfahrensweise ermöglicht ebenfalls die Bildung von reinen Monosilanen. Die Polysilane sind jedoch mit der Katalysatorkomponente kontaminiert. Die Disproportionierung erfolgt vorzugsweise unter Schutzgas bei 100 bis 350 °C.

All diese Verfahrensvarianten haben gemeinsam, daß z.B. über die Wahl des Katalysators bzw. eine geeignete Reaktionsführung wie Temperatur, Reaktionszeit, Katalysatormenge, gezielt die Zusammensetzung der Disproportionierungsprodukte beeinflußt werden kann.

Die eingesetzte Katalysatormenge beträgt vorzugsweise 0,1 bis 10 %, die Reaktionszeit 1 bis 16 Stunden.

Es wurde gefunden, daß z. B. bei Verwendung von Imidazol oder Pyrazol als Katalysator Reaktionszeiten von 3 bis 4 Stunden bis zur Bildung von festem Polysilan erforderlich sind.

Reaktionstemperaturen von ca. 220 °C sind zum Erhalt fester Produkte völlig ausreichend, wenn z. B. Imidazol oder Pyrazol als Katalysator eingesetzt werden.

Die Zusammensetzung und die Konsistenz der erhaltenen Polysilane lassen sich über die Reaktionsdauer und die Temperaturführung sehr stark variieren. Ein bis 300 °C getempertes mit Imidazol hergestelltes Polysilan ist beispielsweise eine goldgelbe, schaumartige und sehr spröde Masse. Durch den Abbruch der Reaktion bei 200 bis 220 °C erhält man ein glasartiges, wieder aufschmelzbares Polysilan, das auch einen höheren Chlorgehalt als die bei höherer Temperatur behandelten Polysilane hat.

Es ist ebenfalls möglich, die Reaktion in einem Stadium abzubrechen, in dem zähe, hochviskose Polysilane vorliegen.

Der Anteil und die Zusammensetzung der Monomerfraktion kann durch Wahl der Reaktionsbedingungen des Katalysators und der Katalysatormenge in weiten Bereichen variiert werden.

Die nachfolgenden Beispiele sollen die Erfindung näher erläutern, ohne sie in ihrem Umfang zu beschränken. Soweit nicht anders angegeben, sind Prozentzeichen-Angaben immer Gewichts-%-Angaben.

### Beispiel 1:

100 ml Methylchlordisilangemisch wurden in einem 3-Halskolben mit 2 % Katalysator versetzt und unter Schutzgas (N₂) von Zimmertemperatur bis maximal 300 °C erwärmt. Die Reaktion wurde, falls die Polysilanbildung nicht schon eher beendet war, nach ca. 6 Stunden abgebrochen. Die entstandenen Spaltprodukte wurden während der Reaktion über eine 30 cm Füllkörperkolonne abdestilliert.

Die Ergebnisse der Versuchsdurchführung sind in Tabelle 1 enthalten.

### Beispiel 2:

Versuchsanordnung analog Beispiel 1, die Füllkörperkolonne enthielt jedoch den trägerfixierten Katalysator und war mit einem Heizband umwickelt, so daß der Katalysator mittels des Heizbandes bei einer Temperatur von 100 bis 140 °C gehalten wurde. Es wurden ebenfalls 100 ml Methylchlordisilan vorgelegt und unter Schutzgas langsam von Zimmertemperatur bis maximal 350 °C erwärmt. Die Reaktion wurde beendet, als die Temperatur des Polysilans länger als 30 min. über 300 °C lag, bzw. die Temperatur am Kolonnenkopf anzeigte, daß keine Monomeren, sondern lediglich nicht spaltbare Verunreinigungen aus der Disilanfraktion, Disilane sowie niedermolekulare Polysilane überdestillieren.

Als Katalysator wurde ein auf Kieselgel fixiertes 3-4,5-Dihydroimidazol-1-yl-propyltriethoxysilan verwendet. Es wurden ca. 90 ml Monomere und 5 g Polysilan erhalten.

### Beispiel 3:

### Versuchsanordnung analog Beispiel 1

100 ml Disilangemisch wurden mit 10 g auf Kieselgel fixiertem Imidazol versetzt. Die Reaktionszeit betrug 80 Min., die Sumpftemperatur max. 330 °C. Es wurden 77 ml Monomere und 11 g Polysilan/Polycarbosilangemisch erhalten.

**Tabelle 1**

| Katalysator | Heizrate °c/min | Reaktionszeit min | Ausbeute | |
|---|---|---|---|---|
| | | | Polysilan/Poly-carbosilan g | Monosilan ml |
| TBD | 0,7 | 315 | 20 | 70 |
| Imidazol | 2,3 | 130 | 23 | 60 |
| 1-Methylimidazol | 4,4 | 70 | 21 | 57 |
| 2-Methylimidazol | 5,8 | 45 | 15 | 70 |
| Pyrazol | 0,8 | 250 | 25 | 74 |
| 3-Methylpyrazol | 5,6 | 55 | 11 | 80 |
| DABCO | 4 | 75 | 22 | 62 |

## Patentansprüche

1. Verwendung von heterocyclischen Kohlenwasserstoffen mit mindestens einem N-Atom in mindestens einem 4- bis 8-gliedrigen Kohlenwasserstoffring, in welchem die Ringnachbarn des Stickstoffs Kohlenstoff oder Stickstoff sein können und der oder die Kohlenwasserstoffringe unabhängig voneinander aromatische oder nichtaromatische Kohlenwasserstoffringe sind, als Katalysatoren zur Disproportionierung von Aryl- und /oder Alkylhalogendisilanen.

2. Verwendung nach Anspruch 1, dadurch gekennzeichnet, daß der Stickstoff im Kohlenwasserstoffring ein- oder zweifach substituiert sein kann durch
- H
- verzweigtes oder lineares Alkyl, vorzugsweise C₁- bis C₆-Alkyl
- Sauerstoff
- Halogen
- Trialkoxysilyl
- NR₂, wobei R = H, lineares oder verzweigtes C₁- bis C₆-Alkyl, Trialkoxysilyl bedeutet
oder über zwei Sigma- und eine π-Bindung im Ring gebunden vorliegt oder den Brückenkopf zu einem weiteren Ring bildet.

3. Verwendung nach Anspruch 1, dadurch gekennzeichnet, daß der Kohlenstoff im Kohlenwasserstoffring ein- bis zweifach substituiert sein kann durch
- H
- verzweigtes oder lineares Alkyl, vorzugsweise C₁- bis C₆-Alkyl
- Sauerstoff
- Halogen
- Trialkoxysilyl
- NR₂, wobei R = H, lineares oder verzweigtes C₁- bis C₆-Alkyl, Trialkoxysilyl bedeutet
wobei die Substituenten gleich oder verschieden sein können oder den Brückenkopf zu einem weiteren Ringsystem bildet.

4. Verwendung nach Ansprüchen 1 bis 3, dadurch gekennzeichnet, daß der heterocyclische Kohlenwasserstoffrest ein 5-Ring mit 1 bis 3 N-Atomen ist.

5. Verwendung nach Anspruch 4, dadurch gekennzeichnet, daß der heterocyclische Kohlenwasserstoff Imidazol, 1-Methylimidazol, 2-Methylimidazol, Pyrazol, 3-Methylpyrazol, Pyrrolidon, N-Methylpyrrolidon, Triazol oder 1,3-Dimethyl-2-imidazolidon ist.

6. Verwendung nach Ansprüchen 1 bis 3, dadurch gekennzeichnet, daß der heterocyclische Kohlenwasserstoff ein 6-Ring mit mindestens einem N-Atom im Kohlenwasserstoffring ist.

7. Verwendung nach Anspruch 6, dadurch gekennzeichnet, daß der heterocyclische Kohlenwasserstoff 2,2'-Bipyridin, N,N-Dibutylpiperazin, oder 1,3-Dimethyl-3,4,5,6-tetrahydro-2(1H)pyrimidon ist.

8. Verwendung nach Ansprüchen 1 bis 3, dadurch gekennzeichnet, daß der heterocyclische Kohlenwasserstoff ein polycyclischer Kohlenwasserstoff mit mindestens einem N-Atom im Kohlenwasserstoffring ist.

9. Verwendung nach Ansprüchen 1 bis 3, dadurch gekennzeichnet, daß der heterocyclische Kohlenwasserstoff Urotropin, Benzimidazol, Benzotriazol, 1,5,7-Triazabicyclo[4.4.0]dec-5-en, 1,8-Diazabicyclo[5.4.0]undec-7-en oder 1,5-Diazabicyclo[4.3.0]non-5-en ist.

10. Verwendung nach Ansprüchen 1 bis 9, dadurch gekennzeichnet, daß der Katalysator direkt oder über einen Spacer und/oder über Siloxygruppen an der Oberfläche eines vorzugsweise silikatischen Trägermaterials fixiert ist.

11. Verfahren zur katalytischen Disproportionierung von Aryl- und/oder Alkyhalogendisilanen, dadurch gekennzeichnet, daß die Umsetzung unter Bildung von Monosilanen und Polysilanen in Gegenwart von gegebenenfalls trägerfixierten Katalysatoren gemäß Ansprüchen 1 bis 10 bei Temperaturen von 50°C bis 350°C erfolgt.

12. Verfahren nach Anspruch 11, dadurch gekennzeichnet, daß die Silane dampf- oder gasförmig an den trägerixierten Katalysator herangeführt werden und die Umsetzung bei mindestens 100°C erfolgt.

13. Verfahren nach Anspruch 12, dadurch gekennzeichnet, daß die Umsetzung bei 120°C bis 130°C erfolgt.

14. Verfahren nach Ansprüchen 11 bis 13, dadurch gekennzeichnet, daß man die gebildeten Monosilane bereits während der Umsetzung durch destillative Abtrennung gewinnt.

15. Verfahren nach Ansprüchen 11 bis 14, dadurch gekennzeichnet, daß man den Aryl- oder Alkylhalogenpolysilan enthaltenden Sumpf gegebenenfalls zur weiteren Umwandlung zu Aryl- oder Alkylhalogencarbosilanen bei Temperaturen bis zu 400 °C thermisch nachbehandelt.

## Claims

1. Use of heterocyclic hydrocarbons having at least one N atom in at least one 4- to 8-membered hydrocarbon ring in which the ring atoms adjacent to the nitrogen can be carbon or nitrogen and the hydrocarbon ring or rings are, independently of one another, aromatic or nonaromatic hydrocarbon rings as catalysts for the disproportionation of arylhalogenodisilanes and/or alkylhalogenodisilanes.

2. Use according to Claim 1, characterized in that the nitrogen in the hydrocarbon ring can be monosubstituted or disubstituted by
- H
- branched or linear alkyl, preferably C₁-C₆-alkyl
- oxygen
- halogen
- trialkoxysilyl
- NR₂, where R = H, linear or branched C₁-C₆-alkyl, trialkoxysilyl,
or is present in the ring bound via two sigma bonds and one π bond or forms the bridgehead to a further ring.

3. Use according to Claim 1, characterized in that the carbon in the hydrocarbon ring can be monosubstituted or disubstituted by
- H
- branched or linear alkyl, preferably C₁-C₆-alkyl
- oxygen
- halogen
- trialkoxysilyl
- NR₂, where R = H, linear or branched C₁-C₆-alkyl, trialkoxysilyl,
where the substituents can be identical or different, or forms the bridgehead to a further ring system.

4. Use according to Claims 1 to 3, characterized in that the heterocyclic hydrocarbon radical is a 5-membered ring having from 1 to 3 N atoms.

5. Use according to Claim 4, characterized in that the heterocyclic hydrocarbon is imidazole, 1-methylimidazole, 2-methylimidazole, pyrazole, 3-methylpyrazole, pyrrolidone, N-methylpyrrolidone, triazole or 1,3-dimethyl-2-imidazolidone.

6. Use according to Claims 1 to 3, characterized in that the heterocyclic hydrocarbon is a 6-membered ring having at least one N atom in the hydrocarbon ring.

7. Use according to Claim 6, characterized in that the heterocyclic hydrocarbon is 2,2'-bipyridine, N,N-dibutylpiperazine or 1,3-dimethyl-3,4,5,6-tetrahydro-2(1H)pyrimidone.

8. Use according to Claims 1 to 3, characterized in that the heterocyclic hydrocarbon is a polycyclic hydrocarbon having at least one N atom in the hydrocarbon ring.

9. Use according to Claims 1 to 3, characterized in that the heterocyclic hydrocarbon is urotropin, benzimidazole, benzotriazole, 1,5,7-triazabicyclo-[4.4.0]dec-5-ene, 1,8-diazabicyclo[5.4.0]undec-7-ene or 1,5-diazabicyclo[4.3.0]non-5-ene.

10. Use according to Claims 1 to 9, characterized in that the catalyst is fixed directly or via a spacer and/or via siloxy groups to the surface of a preferably siliceous support material.

11. Process for the catalytic disproportionation of arylhalogenodisilanes and/or alkylhalogenodisilanes, characterized in that the reaction is carried out so as to form monosilanes and polysilanes in the presence of supported or unsupported catalysts according to Claims 1 to 10 at temperatures of from 50°C to 350°C.

12. Process according to Claim 11, characterized in that the silanes are passed in vapour or gaseous form over the supported catalyst and the reaction is carried out at at least 100°C.

13. Process according to Claim 12, characterized in that the reaction is carried out at from 120°C to 130°C.

14. Process according to Claims 11 to 13, characterized in that the monosilanes formed are isolated during the reaction by distillative removal.

15. Process according to Claims 11 to 14, characterized in that the arylpolysilane- or alkylhalogenopolysilane-containing bottoms are optionally subjected to a thermal after-treatment at temperatures up to 400°C for further conversion into arylhalogenocarbosilanes or alkylhalogenocarbosilanes.

## Revendications

1. Utilisation d'hydrocarbures hétérocycliques ayant au moins un atome d'azote dans au moins un cycle hydrocarboné de 4 à 8 chaînons dans lequel les atomes cycliques adjacents à l'atome d'azote peuvent être des atomes de carbone ou d'azote et le ou les cycles hydrocarbonés sont indépendamment les uns des autres des cycles hydrocarbonés aromatiques ou non aromatiques, comme catalyseurs pour la dismutation d'aryl- et/ou alkylhalogénodisilanes.

2. Utilisation selon la revendication 1, caractérisée en ce que l'azote se trouvant dans le cycle hydrocarboné peut être substitué une ou deux fois par
- H,
- un groupe alkyle linéaire ou ramifié, de préférence un groupe alkyle en C₁-C₆,
- un atome d'oxygène,
- un atome d'halogène,
- un groupe trialcoxysilyle,20
- un groupe NR₂, dans lequel R représente H ou un groupe alkyle en C₁-C₆ linéaire ou ramifié ou trialcoxysilyle,
et est lié dans le cycle par deux liaisons sigma et une liaison π, ou forme une tête de pont donnant un autre cycle.

3. Utilisation selon la revendication 1, caractérisée en ce que l'atome de carbone se trouvant dans le cycle hydrocarboné peut être substitué une ou deux fois par
- H,
- un groupe alkyle linéaire ou ramifié, de préférence un groupe alkyle en C₁-C₆,
- un atome d'oxygène,
- un atome d'halogène,
- un groupe trialcoxysilyle,
- un groupe NR₂, dans lequel R représente H ou un groupe alkyle en C₁-C₆ linéaire ou raimfié ou trialcoxysilyle,
les substituants pouvant être identiques ou différents, ou forme une tête de pont donnant un autre système cyclique.

4. Utilisation selon les revendications 1 à 3, caractérisée en ce que le reste hydrocarboné hétérocyclique est un cycle à 5 chaînons contenant 1 à 3 atomes d'azote.

5. Utilisation selon la revendication 4, caractérisée en ce que l'hydrocarbure hétérocyclique est l'imidazole, le 1-méthylimidazole, le 2-méthylimidazole, le pyrazole, le 3-méthylpyrazole, la pyrrolidone, la N-méthylpyrrolidone, le triazole ou la 1,3-diméthyl-2-imidazolidone.

6. Utilisation selon les revendications 1 à 3, caractérisée en ce que l'hydrocarbure hétérocyclique est un cycle à 6 chaînons ayant au moins un atome d'azote dans le cycle hydrocarboné.

7. Utilisation selon la revendication 6, caractérisée en ce que l'hydrocarbure hétérocyclique est la 2,2-bipyridine, la N,N-dibutylpipérazine ou la 1,3-diméthyl-3,4,5,6-tétrahydro-2(1H)pyrimidone.

8. Utilisation selon les revendications 1 à 3, caractérisée en ce que l'hydrocarbure hétérocyclique est un hydrocarbure polycyclique ayant au moins un atome d'azote dans le cycle hydrocarboné.

9. Utilisation selon les revendications 1 à 3, caractérisée en ce que l'hydrocarbure hétérocyclique est l'urotropine, le benzimidazole, le benzotriazole, le 1,5,7-triazabicyclo[4.4.0]déc-5-ène, le 1,8-diazabicyclo[5.4.0]undéc-7-ène ou le 1,5-diazabicyclo[4.3.0]non-5-ène.

10. Utilisation selon les revendications 1 à 9, caractérisée en ce que le catalyseur est fixé, directement ou par l'intermédiaire d'un espaceur et/ou de groupes siloxy, sur la surface d'un matériau support, de préférence de type silicate.

11. Procédé de dismutation catalytique d'aryl- et/ou alkylhalogénodisilanes, caractérisé en ce que la réaction s'effectue en présence de catalyseurs selon les revendications 1 à 10 éventuellement fixés sur des supports, à des températures de 50°C à 350°C, avec formation de monosilanes et de polysilanes.

12. Procédé selon la revendication 11, caractérisé en ce que l'on amène les silanes sous forme vapeur ou gazeuse sur le catalyseur fixé sur un support et on effectue la réaction à au moins 100°C.

13. Procédé selon la revendication 12, caractérisé en ce que la réaction s'effectue à une température de 120°C à 130°C.

14. Procédé selon les revendications 11 à 13, caractérisé en ce que l'on récupère les monosilanes formés déjà au cours de la réaction en les séparant par distillation.

15. Procédé selon les revendications 11 à 14, caractérisé en ce que l'on soumet éventuellement le résidu contenant des aryl- ou alkylhalogénopolysilanes à un traitement thermique ultérieur à des températures allant jusqu'à 400°C pour les transformer encore en aryl- ou alkylhalogénocarbosilanes.
